# EUROPEAN PATENT APPLICATION

(11) **EP 4 258 004 A2**
(43) Veröffentlichungstag der Anmeldung: **11.10.2023**
(21) Anmeldenummer: 23179709.3
(22) Anmeldetag: 20.09.2019
(51) Int. Cl.: G01S 5/00

(54) **SYSTEM ZUR BESTIMMUNG DER POSITION VON VERKEHRSLEITEINRICHTUNGEN**

(30) Priorität: 26.09.2018 DE 102018007632
(62) Teilanmeldung aus: 19198662.9
(71) Anmelder: CM1 GmbH, 91207 Lauf an der Pegnitz (DE)
(72) Erfinder: KALUZA, Sebastian, 82467 Garmisch-Partenkirchen (DE); FALKNER, Max-David, 2304 Orth an der Donau (AT); HÄUPL, Markus, 9529 Sattendorf (AT)
(74) Vertreter: PATERIS Patentanwälte PartmbB

(57) **Zusammenfassung**

Die vorliegende Erfindung betrifft ein System (100) zur Bestimmung der Position von Verkehrsleiteinrichtungen, wobei das System wenigstens eine Sensoranordnung (SD) und wenigstens eine Schnittstelleneinheit (12) aufweist, wobei die Sensoranordnung an wenigstens einer Verkehrsleiteinrichtung (18 bis 34) anbringbar oder angebracht ist, wobei die Sensoranordnung dazu ausgebildet ist, zumindest Positionsinformationen der Sensoranordnung zu bestimmen, die die Position der wenigstens einen Verkehrsleiteinrichtung angeben, wobei die Sensoranordnung dazu ausgebildet ist, die bestimmten Positionsinformationen an die wenigstens eine Schnittstelleneinheit zu senden, wobei die wenigstens eine Schnittstelleneinheit dazu ausgebildet ist, die von der Sensoranordnung gesendeten Positionsinformationen zu empfangen, und wobei die wenigstens eine Schnittstelleneinheit ferner dazu ausgebildet ist, die Positionsinformationen wenigstens einem externen Empfanger (16) bereitzustellen. Ferner betrifft die vorliegende Erfindung eine Sensoreinheit für ein solches System.

## Beschreibung

Die vorliegende Erfindung betrifft ein System zur Bestimmung der Position einer oder mehrerer Verkehrsleiteinrichtungen. Die vorliegende Erfindung betrifft ferner eine Sensoreinheit für ein derartiges System. Zudem betrifft die vorliegende Erfindung eine Verkehrsleiteinrichtung oder eine Warnleuchte für Verkehrssicherungsmaßnahmen mit einer solchen Sensoreinheit.

Verkehrsleiteinrichtungen werden zur Begrenzung von Fahrbahnen und/oder zum Festlegen von Fahrbahnen bei geänderter Verkehrsführung bzw. bei geänderter Spurführung verwendet. Die Verkehrsleiteinrichtungen werden benötigt, um einem Verkehrsteilnehmer die geänderte Verkehrsführung anzuzeigen. Die Verkehrsführung wird beispielsweise bei Baustellen, bei Arbeiten in der Nähe der Fahrbahn oder auch für Aufräumarbeiten bei Unfällen geändert. Um den Verkehr an Baustellen vorbeizuführen, können die Fahrbahnen beispielsweise verschwenkt und/oder die Fahrzeuge auf eine Spur der Gegenfahrbahn übergeleitet werden, die eigentlich dem Gegenverkehr zugeordnet ist.

Gerade bei Baustellen ist die korrekte Position der einzelnen Verkehrsleiteinrichtungen äußerst wichtig, da von der Position der Verkehrsleiteinrichtungen die Sicherheit des Baustellenpersonals, d. h. der an der Baustelle tätigen Arbeiter, abhängt. Der Baustellenbetreiber oder die an der Baustelle tätigen Firmen, die Arbeiten an der Fahrbahn oder im Bereich der Fahrbahn vornehmen, müssen exakt dokumentieren, dass die Verkehrsleiteinrichtungen korrekt positioniert wurden und die korrekte Positionierung der Verkehrsleiteinrichtungen regelmäßig überprüft wird. Eine derartige Überprüfung findet in Abhängigkeit der gesetzlichen Vorgaben häufig mehrmals täglich statt. Sollte es zu einem Unfall kommen, muss der Baustellenbetreiber oder die zuständige Firma nachweisen können, dass die Verkehrsleiteinrichtung korrekt positioniert und die Positionierung regelmäßig überprüft wurde. Die Überprüfung der Position der Verkehrsleiteinrichtungen und die Dokumentation der Prüfungen gehen somit mit einem hohen Zeit- und Kostenaufwand einher.

Die Position von Verkehrsleiteinrichtungen wird auch für Fahrassistenzsysteme eines Fahrzeugs oder autonome Fahrzeuge benötigt. Für Fahrassistenzsysteme oder die Systeme eines autonomen Fahrzeugs stellen insbesondere Baustellen hochkomplexe Situationen dar. Eine Baustelle kann verengte Fahrspuren, sich ändernde Streckenführungen oder fehlende Straßen- bzw. Fahrbahnbegrenzungen aufweisen. Ohne die Position der Verkehrsleiteinrichtungen zu kennen, sind Fahrzeuge mit Fahrassistenzsystemen oder autonome Fahrzeuge häufig nicht in der Lage, Baustellen autonom oder selbstständig mit dem Fahrassistenzsystem zu durchfahren. In vielen Fällen fordert das Fahrzeug den Fahrer dann auf, im Bereich der Baustelle die Kontrolle über das Fahrzeug zu übernehmen. Autonome Fahrzeuge oder Fahrassistenzsysteme greifen häufig auf kartenbasierte Umgebungsmodelle zu, wenn sie Informationen über den Straßenverlauf bzw. den Straßenverkehr benötigen. In einem kartenbasierten Umgebungsmodell sind jedoch häufig Änderungen der Verkehrsführung, gerade wenn diese kurzfristig vorgenommen werden, nicht oder nicht ausreichend verzeichnet, wodurch die autonomen Fahrzeuge bzw. die Fahrassistenzsysteme einen Streckenabschnitt mit geänderter Verkehrsführung oder den Bereich einer Baustelle nicht autonom oder selbstständig durchfahren können. Ähnlich verhält es sich mit Tunneln und Unterführungen, die unter Umständen von autonomen Fahrzeugen oder Fahrzeugen mit Fahrerassistenzsystemen nicht selbstständig oder autonom durchfahren werden können.

Es ist eine Aufgabe der vorliegenden Erfindung ein System zur Bestimmung der Position von Verkehrsleiteinrichtungen bereitzustellen, mit dem sich Positionsinformationen von einer Verkehrsleiteinrichtung oder mehreren Verkehrsleiteinrichtungen hoch exakt und echtzeitnah bestimmen lassen.

Diese Aufgabe wird mit einem System mit den Merkmalen des Anspruchs 1 gelöst. Weitere Ausführungsformen sind in den abhängigen Ansprüchen angegeben.

Das System zur Bestimmung der Position von Verkehrsleiteinrichtungen weist wenigstens eine Sensoranordnung und wenigstens eine Schnittstelleneinheit auf. Die Sensoranordnung ist an wenigstens einer Verkehrsleiteinrichtung anbringbar oder angebracht. Die Sensoranordnung ist dazu ausgebildet, Positionsinformationen der Sensoranordnung zu bestimmen, die die Position der wenigstens einer Verkehrsleiteinrichtung angeben. Die Sensoranordnung ist dazu ausgebildet, die bestimmten Positionsinformationen an die wenigstens eine Schnittstelleneinheit zu senden. Die wenigstens eine Schnittstelleneinheit ist dazu ausgebildet, die von der wenigstens einen Sensoreinheit gesendeten Positionsinformationen zu empfangen, wobei die wenigstens eine Schnittstelleneinheit ferner dazu ausgebildet ist, die Positionsinformationen wenigstens einem externen Empfänger bereitzustellen.

Mit dem erfindungsgemäßen System kann die Position wenigstens einer Verkehrsleiteinrichtung und damit der Verlauf des Verkehrsweges im Bereich der wenigstens einen Verkehrsleiteinrichtung exakt und in Echtzeit oder zumindest echtzeitnah bestimmt werden. Die mit dem System bestimmten Positionsinformationen können zur Überprüfung und Dokumentation der Positionierung der Verkehrsleiteinrichtungen bei geänderter Verkehrsführung (z.B. bei einer Baustelle) bereitgestellt werden. Ferner können die von dem System bestimmten Positionsinformationen direkt für autonome Fahrzeuge oder Fahrassistenzsysteme sowie für Kartendienste bereitgestellt werden, auf die autonome Fahrzeuge oder die Fahrassistenzsysteme zugreifen können. Zudem kann die genaue Verkehrsführung bzw. Streckenführung und auch die Position und Lage von Baustellen exakt und echtzeitnah bestimmt werden.

Die wenigstens eine Schnittstelleneinheit kann Teil der Sensoranordnung sein. Die wenigstens eine Schnittstelleneinheit kann dazu ausgebildet sein, Positionsinformationen zu erfassen.

Die Sensoranordnung kann eine oder mehrere Sensoreinheiten aufweisen. Die Sensoreinheiten der Sensoranordnung können an wenigstens einer Verkehrsleiteinrichtung anbringbar oder angebracht sein. Die Sensoreinheiten können dazu ausgebildet sein, Positionsinformationen der einzelnen Sensoreinheiten der Sensoranordnung zu bestimmen, die die Position der wenigstens einen Verkehrsleiteinrichtung angeben. Wenigstens eine der Sensoreinheiten der Sensoranordnung kann dazu ausgebildet sein, die bestimmten Positionsinformationen an die wenigstens eine Schnittstelleneinheit zu senden. Die wenigstens eine Schnittstelleneinheit kann dazu ausgebildet sein, die von der wenigstens einen Sensoreinheit gesendeten Positionsinformationen zu empfangen, wobei die wenigstens eine Schnittstelleneinheit ferner dazu ausgebildet sein kann, die Positionsinformationen wenigstens einem externen Empfänger bereitzustellen.

Die Sensoreinheiten der Sensoranordnung können zusammenwirken, um Positionsinformationen für jede einzelne der Sensoreinheiten bestimmen zu können. Anders ausgedrückt, kann eine der Sensoreinheiten zur Bestimmung der Positionsinformationen von zumindest einer weiteren Sensoreinheit beitragen. Die Sensoreinheiten können ein Sensorfeld bilden, in dem Veränderungen der Positionsinformationen der einzelnen Sensoreinheiten und damit Veränderungen der Positionen der Verkehrsleiteinrichtung oder der Verkehrsleiteinrichtungen unmittelbar und exakt erfasst werden können.

Die Sensoreinheiten und die wenigstens eine Schnittstelleneinheit können im Wesentlichen identisch aufgebaut sein. Mit anderen Worten kann jede Sensoreinheit zum Empfangen von Positionsinformationen und zum Senden von Positionsinformationen an einen externen Empfänger ausgebildet sein. Die wenigstens eine Schnittstelleneinheit kann zum Bestimmen von Positionsinformationen ausgebildet sein. Falls die Schnittstelleneinheiten und die Sensoreinheiten identisch aufgebaut sind, können diese Einheiten sich in der ihnen jeweils zugewiesenen Funktion (Sensoreinheit oder Schnittstelleneinheit) unterscheiden.

Der wenigstens eine Sensoreinheit kann dazu ausgebildet sein, die Positionsinformationen mittels UWB (englisch: Ultra Wide Band; deutsch: Ultrabreitband), WiFi, RTK (englisch: Real Time Kinematic; deutsch: Echtzeitkinematik), GPS, DGPS (englisch: Differential Global Positioning System; deutsch: Differentielles Globales Positionierungssystem) oder 5G zu bestimmen. Als Verfahren zur Bestimmung der Sensoreinheiten kann beispielsweise eines der Verfahren least-squares, maximum likelihood estimate, maximum aposteriori propability, Triangulation und/oder Trilateration verwendet werden.

Verkehrsleiteinrichtungen können beispielsweise Leitbaken, Schrankenzäune, Absperrtafeln, Tunnel- und Betonleitwände, Stahlschutzwände, Leitkegel, Pelonen und Leitpfosten sein. Verkehrsleiteinrichtungen können allgemein temporäre oder dauerhafte Einrichtungen sein, die einem Fahrzeug oder einem Verkehrsteilnehmer die Verkehrsführung anzeigen oder vorgeben.

Die wenigstens eine Sensoreinheit der Sensoranordnung kann dazu ausgebildet sein, relative Positionsinformationen relativ zu zumindest einer weiteren der Sensoreinheiten zu bestimmen. Eine Sensoreinheit kann beispielsweise die relativen Positionsinformationen wenigstens einer weiteren Sensoreinheit relativ zu ihr selbst und/oder relativ zu wenigstens einer weiteren Sensoreinheit erfassen. Die Sensoreinheiten der Sensoranordnung können somit gegenseitig ihre relativen Positionsinformationen bestimmen. Jede Sensoreinheit kann einen Referenzpunkt für die Bestimmung der Positionsinformationen bilden. Da die einen Referenzpunkt bildenden Sensoreinheiten gegenseitig ihre relativen Positionsinformationen relativ zueinander bestimmen können, können die relativen Positionsinformationen der Sensoreinheiten in einer Ebene oder in einem Raum bestimmt werden. Die Sensoreinheiten der Sensoranordnung können zwischen sich ein Maschennetz aufbauen, in dem kleinste Veränderungen der Positionsinformationen einer oder mehrerer der Sensoreinheiten echtzeitnah erfasst und an die wenigstens eine Schnittstelleneinheit ausgegeben werden können.

Die wenigstens eine Sensoreinheit kann wenigstens einen Sensor aufweisen, der die Positionsinformationen wenigstens einer weiteren Sensoreinheit der Sensoranordnung erfassen kann. Die von der wenigstens einen Sensoreinheit erfassten Positionsinformationen können einen Abstandwert einer der Sensoreinheiten zu wenigstens einer weiteren der Sensoreinheiten umfassen. Beispielsweise kann eine Sensoreinheit einen Abstandswert zu der ihr nächstliegenden Sensoreinheit oder zu den ihr nächstliegenden Sensoreinheiten erfassen. In dem von den Sensoreinheiten aufgebauten Maschennetz kann jede Sensoreinheit kontinuierlich den Abstand zu einer oder mehreren der übrigen Sensoreinheiten erfassen. Änderungen eines Abstandswerts oder mehrerer Abstandswerte zwischen einer oder mehreren Sensoreinheiten können echtzeitnah von den Sensoreinheiten erfasst werden. Diese Veränderungen können dann an die wenigstens eine Schnittstelleneinheit ausgegeben und als aktualisierte Positionsinformationen wenigstens einem externen Empfänger bereitgestellt werden.

Das System kann dazu ausgebildet sein, die Position der wenigstens einen Schnittstelleneinheit in absoluten Positionsinformationen zu ermitteln und/oder einzulesen. Die absoluten Positionsinformationen der wenigstens einen Schnittstelleneinheit können vorgegeben sein. Die absoluten Positionsinformationen der wenigstens einen Schnittstelleneinheit können die Geoposition der wenigstens einen Schnittstelleneinheit angeben. Die Geoposition der wenigstens einen Schnittstelleneinheit kann in absoluten Koordinaten angegeben werden. Die Geoposition der wenigstens einen Schnittstelleneinheit kann beispielsweise in WGS84-Koordinaten angegeben werden. Die Geoposition der wenigstens einen Schnittstelleneinheit kann beispielsweise über ein bekanntes Vermessungsverfahren bestimmt werden.

Eine oder mehrere Sensoreinheiten können wenigstens einen weiteren Sensoren aufweisen. Dieser Sensor kann beispielsweise ein Beschleunigungssensor oder ein Gyroskop sein. Der Beschleunigungssensor und/oder das Gyroskop können dazu dienen, Energie zu sparen. Der Beschleunigungssensor und/oder das Gyroskop können eine Bewegung der Sensoreinheit erfassen und das System "aufwecken", um die aktuellen Positionsinformationen zu bestimmen. Die Sensoreinheiten können nur im "wachen" Zustand die bestimmten Positionsinformationen senden, wodurch Energie eingespart werden kann.

Das System kann wenigstens eine Informationsverarbeitungseinheit aufweisen. Die Informationsverarbeitungseinheit kann die von den Sensoreinheiten erfassten relativen Positionsinformationen verarbeiten. Die Informationsverarbeitungseinheit kann dazu ausgebildet sein, die Informationen zu verarbeiten, die von dem wenigstens einen weiteren Sensor der Sensoreinheit erfasst wurden. Die Informationsverarbeitungseinheit kann dazu ausgebildet sein, die von den Sensoreinheiten ermittelten relativen Positionsinformationen in Bezug zu absoluten Positionsinformationen der wenigstens einen Schnittstelleneinheit setzen. Durch die Herstellung eines Bezugs zwischen den relativen Positionsinformationen der Sensoreinheiten und den absoluten Positionsinformationen der wenigstens einen Schnittstelleneinheit, können die relativen Positionsinformationen der Sensoreinheiten mit den absoluten Positionsinformationen verortet werden. Dadurch können die relativen Positionsinformationen der Sensoreinheiten beispielsweise mit Bezug zur Geoposition der wenigstens einen Schnittstelleneinheit von der wenigstens einen Schnittstelleneinheit an einen externen Empfänger ausgegeben werden. Ein externer Empfänger für relative Positionsinformationen mit Bezug zur Geopositionen können Kartendienste sein, die digitale Karten für Navigationssysteme von autonomen Fahrzeugen oder von Fahrassistenzsystemen bereitstellen. Solche Kartendienste können beispielsweise cloud-basiert sein. Die wenigstens eine Schnittstelleneinheit kann derart ausgebildet sein, dass sie direkt mit einer (cloud-basierten) digitalen Karte kommunizieren kann, um die von dem System bestimmten Positionsinformationen in die digitale Karte einzugeben. Weitere Empfänger für derartige Positionsinformationen können beispielsweise Verkehrsleitzentralen oder Autobahnanbieter sein.

Die wenigstens eine Schnittstelleneinheit kann dazu ausgebildet sein, kabellos mit dem wenigstens einen externen Empfänger zu kommunizieren. Jede Sensoreinheit kann wenigstens eine Sende-/Empfangseinheit aufweisen, die zumindest zur kabellosen Kommunikation mit der wenigstens einen Schnittstelleneinheit ausgebildet ist. Die Sensoreinheiten können zumindest mit der wenigstens einen Schnittstelleneinheit beispielsweise über eine Funktechnologie namens "Symmetrical double-sided two way ranging" kommunizieren. Die Sensoreinheiten der Sensoranordnung können auch untereinander kabellos kommunizieren. Jede der Sensoreinheiten kann kabellos Informationen von anderen Sensoreinheiten empfangen und Informationen an andere Sensoreinheiten kabellos senden.

Der externe Empfänger kann ferner ein Fahrzeug sein. Die wenigstens eine Schnittstelleneinheit kann dazu ausgebildet sein, mit einem Fahrzeug als externen Empfänger zu kommunizieren. Die von dem System bestimmten Positionsinformationen können in Echtzeit oder zumindest echtzeitnah an ein Fahrzeug übermittelt werden, dass sich dem Streckenabschnitt mit geänderter Verkehrsführung nähert oder sich in diesem Streckenabschnitt befindet.

Der wenigstens eine Sensor zur Erfassung der Positionsinformationen kann ein Time-of-Flight-Sensor sein. Mit einem Time-of-Flight-Sensoren können Abstände bzw. Entfernungen und auch Höhenunterschiede erfasst werden. Mit den Time-of-Flight-Sensoren können somit relative Positionsinformationen der einzelnen Sensoreinheiten erfasst werden, die die Position und die Lage der einzelnen Sensoreinheiten relativ zueinander angeben. Mit den Time-of-Flight-Sensoren können selbst geringe Änderungen der relativen Positionsinformationen der Sensoreinheiten bzw. der Verkehrsleiteinrichtungen, an denen die Sensoreinheiten angebracht bzw. anbringbar sind, erfasst werden. Mit den Time-of-Flight-Sensoren kann das digitale Maschennetz aufgebaut werden, um die Position und Lage der geänderten Verkehrsführung bzw. des Streckenabschnitts mit der geänderten Verkehrsführung zu erzeugen. Die erfassten Änderungen der Positionsinformationen können an die wenigstens eine Schnittstelleneinheit ausgegeben und von der wenigstens einen Schnittstelleneinheit für externe Empfänger bereitgestellt werden.

Die wenigstens eine Schnittstelleneinheit kann dazu ausgebildet ein, ein Koordinatensystem aufzuspannen. Die Positionsinformationen der Sensoreinheiten können mit Bezug auf dieses Koordinatensystem bestimmt werden. In dem von der wenigstens einen Schnittstelleneinheit aufgespannten lokalen Koordinatensystem können die relativen Positionsinformationen der Sensoreinheiten bestimmt werden. Diese relativen Positionsinformationen können mit den absoluten Positionsinformationen verknüpft und an einen externen Empfänger ausgegeben werden. Die wenigstens eine Schnittstelleneinheit kann eine Sensoreinheit sein. Die wenigstens eine Schnittstelleneinheit kann in diesem Fall einen Sensor zur Erfassung von relativen Positionsinformationen aufweisen.

Die wenigstens eine Schnittstelleneinheit kann an das Internet angebunden sein. Darüber hinaus kann die wenigstens eine Schnittstelleneinheit dazu ausgebildet sein, das sie mittels WiFi Informationen senden und empfangen kann. Die wenigstens eine Schnittstelleneinheit kann wenigstens einen GPS-Empfänger aufweisen.

Das System kann mehrere Schnittstelleneinheiten aufweisen. Jeder Schnittstelleneinheit kann jeweils ein Teil der Sensoreinheiten der Sensoranordnung zugeordnet werden. Anders ausgedrückt kann ein Teil der Sensoreinheiten mit einer Schnittstelleneinheit kommunizieren, wohingegen der andere Teil der Sensoreinheiten mit einer weiteren Schnittstelleneinheit kommuniziert. Dies kann insbesondere der Fall sein, wenn das System einen relativ großen Streckenabschnitt oder Bereich abdecken soll. Dadurch können die von dem System bestimmten Positionsinformationen selbst bei einem großen mit dem System abzudeckenden Bereich möglichst echtzeitnah einem externen Empfänger bereitgestellt werden.

Die Sensoreinheiten der Sensoranordnung können an wenigstens einer Verkehrsleiteinrichtung anbringbar oder angebracht sein. Verkehrsleiteinrichtungen können beispielsweise Leitbaken, Schrankenzäune, Absperrtafeln, Tunnel- und Betonleitwände, Stahlschutzwände, Leitkegel, Pelonen und Leitpfosten sein. Verkehrsleiteinrichtungen können allgemein temporäre oder dauerhafte Einrichtungen sein, die einem Fahrzeug oder einem Verkehrsteilnehmer die Verkehrsführung anzeigen oder vorgeben.

Die vorliegende Erfindung betrifft ferner wenigstens eine Sensoreinheit mit wenigstens einem Sensor zur Erfassung der Positionsinformationen, wenigstens einer Sende-/Empfangseinheit, die zur kabellosen Kommunikation ausgebildet ist, und wenigstens einer Steuerung, die zur Steuerung des wenigstens einen Sensors und/oder der wenigstens einen Sende-/Empfangseinheit ausgebildet ist.

Der wenigstens eine Sensor zur Bestimmung der Positionsinformationen kann ein Time-of-Flight-Sensor sein. Der wenigstens eine Sensor kann dazu ausgebildet sein, Positionsinformationen mittels UWB (englisch: Ultra Wide Band; deutsch: Ultrabreitband), WiFi oder RTK (englisch: Real Time Kinematic; deutsch: Echtzeitkinematik) zu bestimmen. Der wenigstens eine Sensor kann ferner dazu ausgebildet sein, die Positionsinformationen zentimetergenau mittels GPS, DGPS (englisch: Differential Global Positioning System; deutsch: Differentielles Globales Positionierungssystem) oder 5G zu bestimmen.

Die wenigstens eine Sensoreinheit kann zur Befestigung an oder Integration in eine Verkehrsleiteinrichtung ausgebildet sein. Die wenigstens eine Sensoreinheit kann beispielsweise an einer Warnleuchte für Verkehrssicherungsmaßnahmen befestigt oder in eine solche Warnleuchte integriert sein. Die Sensoreinheit kann dazu ausgebildet sein, mit einer Energiespeichereinheit eine Verkehrsleiteinrichtung verbindbar oder verbunden zu sein. Die Sensoreinheit kann eine Energiespeichereinheit oder eine Einheit zur Erzeugung elektrischer Energie aufweisen. Beispielsweise kann die wenigstens eine Sensoreinheit ein Solarelement aufweisen, mit dem elektrische Energie erzeugt werden kann. Eine Sensoreinheit kann somit eine autarke und/oder eine in sich abgeschlossene Einheit sein.

Die wenigstens eine Sensoreinheit kann mit einer Kapselung ausgebildet sein. Die Sensoreinheit kann mit der Kapselung wasserdicht und/oder staubdicht ausgebildet sein. Dadurch kann die wenigstens eine Sensoreinheit vor Staub, Schmutz, Feuchtigkeit und Temperaturschwankungen geschützt werden. Die Kapselung kann ferner dazu ausgebildet sein, die Sensoreinheit vor Schlägen, Stößen und Vibrationen zu schützen. Gerade im Umfeld von Baustellen kann durch eine Kapselung die Lebensdauer der Sensoreinheit erheblich erhöht werden.

Die wenigstens eine Sensoreinheit kann wenigstens einen der nachfolgend aufgeführten Sensoren umfassen: Gyroskop, Beschleunigungssensor, Magnetometer, Barometer, Feuchtigkeitssensor, Temperatursensor. Durch diese Sensoren können die mechanischen Belastungen und die Belastungen durch Umwelteinflüsse der Sensoreinheit ermittelt werden. Beispielsweise kann durch den Beschleunigungssensor und/oder das Gyroskop festgestellt werden, ob die Sensoreinheit bewegt wurde und/oder das "Aufwachen" des Systems initiiert werden. Ferner kann der Beschleunigungssensor und/oder das Gyroskop dazu dienen das System in den Ruhezustand zu versetzten, um beispielsweise Energie zu sparen. Zudem können durch diese Sensoren die mechanischen Belastungen der Sensoreinheiten durch einen Stoß oder Schlag beispielsweise bei einem Fahrzeuganprall festgestellt werden.

Die vorliegende Erfindung betrifft ferner eine Verkehrsleiteinrichtung mit wenigstens einer Sensoreinheit der voranstehend beschriebenen Art. Zudem ist die vorliegende Erfindung auf eine Warnleuchte für Verkehrssicherungsmaßnahmen mit wenigstens einer Sensoreinheit gerichtet.

Im Folgenden wird ein Ausführungsbeispiel mit Bezug auf die beigefügten Figuren beschrieben. Es stellen dar:
- Fig. 1: eine schematische Ansicht eines Systems zur Bestimmung der Positionsinformationen von Verkehrsleiteinrichtungen;
- Fig. 2: eine schematische Ansicht des Systems im installierten Zustand;
- Fig. 3: eine weitere schematische Ansicht des Systems im installierten Zustand, wobei einige der Sensoreinheiten eine veränderte Position aufweisen;
- Fig. 4: eine schematische Ansicht, die die Kommunikation des Systems mit einem Fahrzeug als externen Empfänger zeigt;
- Fig. 5: eine schematische Ansicht, die die Kommunikation des Systems mit einem Kartendienst als externen Empfänger zeigt; und
- Fig. 6: eine schematische Ansicht einer Sensoreinheit.

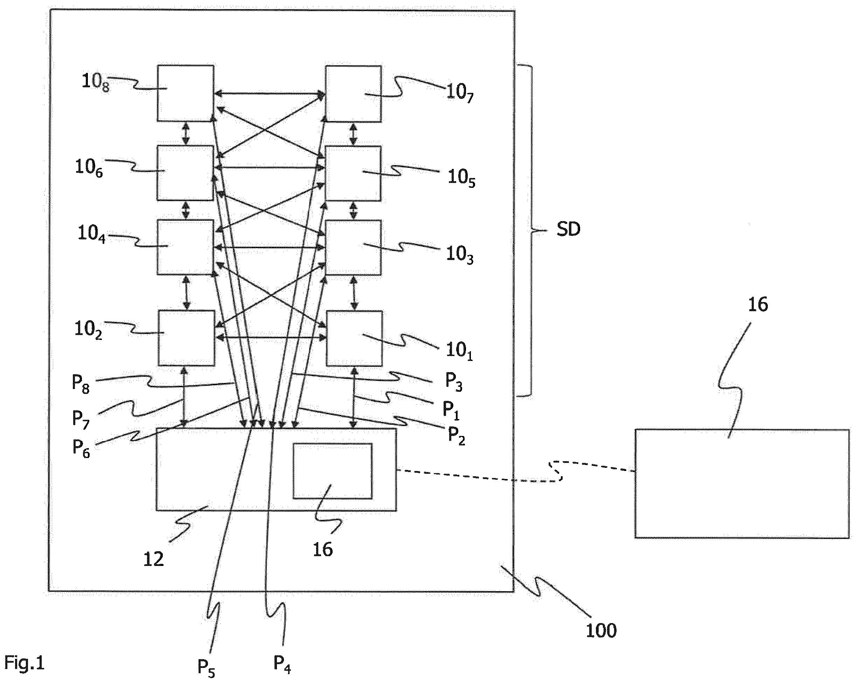

Figur 1 zeigt eine schematische Ansicht eines Systems 100 zur Bestimmung der Position einer Verkehrsleiteinrichtung oder mehrerer Verkehrsleiteinrichtungen.

Das System 100 umfasst eine Sensoranordnung SD, die mehrere Sensoreinheiten 10₁ bis 10₈ aufweist, und eine Schnittstelleneinheit 12. Wie durch die Pfeile P₁ bis P₈ dargestellt ist, kommunizieren die Sensoreinheiten 10₁ bis 10₈ mit der Schnittstelleneinheit 12. Die Kommunikation zwischen den Sensoreinheiten 10₁ bis 10₈ und der Schnittstelleneinheit 12 erfolgt kabellos. Die Sensoreinheiten 10₁ bis 10₈ können auch untereinander kabellos kommunizieren, wie durch die Pfeile dargestellt ist, die sich zwischen den einzelnen Sensoreinheiten 10₁ bis 10₈ erstrecken. Die Sensoreinheiten 10₁ bis 10₈ können an Verkehrsleiteinrichtungen (nicht dargestellt) befestigt sein. Ferner können die Sensoreinheiten 10₁ bis 10₈ auch in die Verkehrsleiteinrichtungen integriert sein. Es ist denkbar an jeder Verkehrsleiteinrichtung eine Sensoreinheit 10₁ bis 10₈ anzuordnen. Ferner kann eine Sensoreinheit 10₁ bis 10₈ auch an einem Abschnitt einer Verkehrsleiteinrichtung angebracht sein. Aus Gründen der Übersichtlichkeit sind nicht sämtliche Kommunikationswege dargestellt. Aus diesem Grund sind diese Pfeile auch nicht mit Bezugszeichen versehen.

Die nicht mit Bezugszeichen versehenen Pfeile veranschaulichen zusätzlich zu den Kommunikationswegen der Sensoreinheiten 10₁ bis 10₈ untereinander wie mit den Sensoreinheiten 10₁ bis 10₈ die Positionsinformationen der einzelnen Sensoreinheiten 10₁ bis 10₈ bestimmt werden können. Die Sensoreinheiten 10₁ bis 10₈ bauen zwischen sich ein Maschennetz auf. Jede Sensoreinheit 10₁ bis 10₈ ermittelt die relativen Positionsinformationen wenigstens einer weiteren Sensoreinheit 10₁ bis 10₈. Die relativen Positionsinformationen können beispielsweise einen Abstandswert bzw. den Abstand zwischen den einzelnen Sensoreinheiten 10₁ bis 10₈ aufweisen. Eine der Sensoreinheiten 10₁ bis 10₈ kann somit ihren Abstand bzw. die Entfernung zu einer oder mehreren der übrigen Sensoreinheiten 10₁ bis 10₈ erfassen. Beispielsweise kann die Sensoreinheit 10₈ den Abstand zu den Sensoreinheiten 10₇, 10₆ und 10₅ erfassen. Die Sensoreinheit 10₇ erfasst den Abstand zu den Sensoreinheiten 10₅, 10₆ und 10₈. Alle Sensoreinheiten 10₁ bis 10₈ ermitteln untereinander den Abstand zu mehreren der übrigen Sensoreinheiten 10₁ bis 10₈. Dadurch wird das Maschennetz zwischen den Sensoreinheiten 10₁ bis 10₈ aufgebaut. Mit diesem Maschennetz können kleinste Veränderungen der Positionsinformationen einer oder mehrerer der Sensoreinheiten 10₁ bis 10₈ echtzeitnah und hochgenau erfasst. Die erfassten Positionsinformationen können dann an die Schnittstelleneinheit 12 ausgegeben werden.

Das System 100 kann die absoluten Positionsinformationen der Schnittstelleneinheit 12 ermitteln und/oder einlesen. Die absoluten Positionsinformationen der Schnittstelleneinheit 12 können vorgegeben sein und/oder vorab mit einem bekannten Vermessungsverfahren bestimmt werden. Beispielsweise können die absoluten Positionsinformationen der Schnittstelleneinheit 12 die Geoposition der Schnittstelleneinheit 12 umfassen. Die Geoposition der Schnittstelleneinheit 12 kann beispielsweise in Weltkoordinaten angegeben sein. Das System 100 bzw. die Schnittstelleneinheit 12 können eine Informationsverarbeitungseinheit 14 aufweisen, die einen Bezug zwischen den von den Sensoreinheiten 10₁ bis 10₈ erfassten relativen Positionsinformationen und den absoluten Positionsinformationen der Schnittstelleneinheit 12 herstellt.

Die Schnittstelleneinheit 12 des Systems 100 kann mit einem externen Empfänger 16 kommunizieren. Die Kommunikation zwischen der Schnittstelleneinheit 12 und dem externen Empfänger 16 kann kabellos erfolgen. Die Schnittstelleneinheit 12 stellt dem externen Empfänger 16 die mit dem System 100 erfassten Positionsinformationen bereit. Der externe Empfänger 16 kann ein Kartendienst sein, der eine digitale Karte (wird auch als "HD-Karte" bezeichnet) für autonome Fahrzeuge oder Fahrassistenzsysteme bereitstellt. Die von dem System 100 erfassten Positionsinformationen können echtzeitnah in die digitale Karte des Kartendienstes eingespielt werden. Ferner kann der externe Empfänger 16 ein Fahrzeug sein. Das Fahrzeug (nicht gezeigt) kann direkt mit der Schnittstelleneinheit 12 des Systems 100 kommunizieren, um dem Fahrzeug die mit dem System 100 ermittelten Positionsinformationen echtzeitnah zu übermitteln.

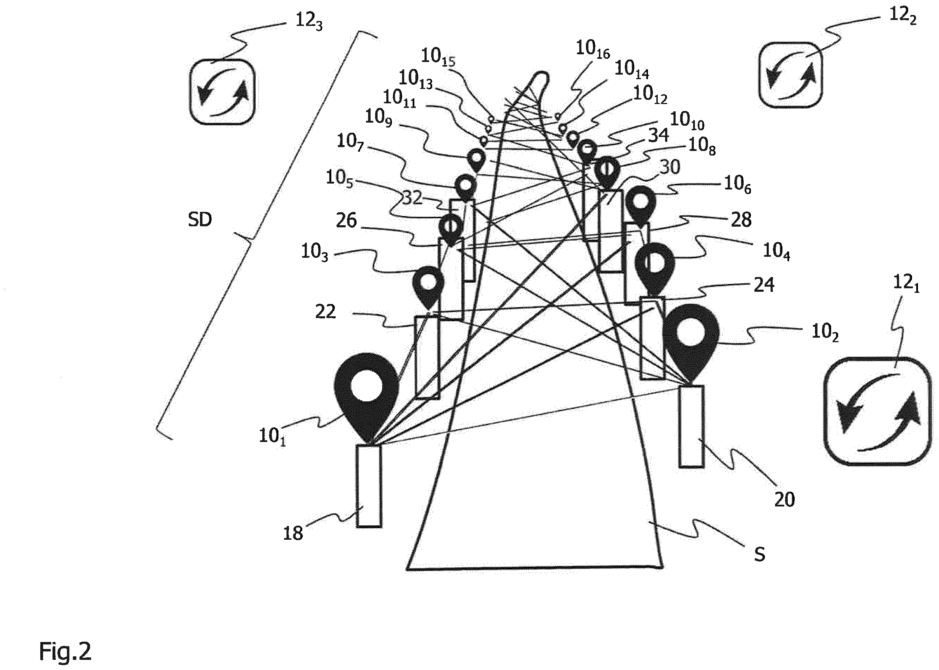

Figur 2 zeigt ein Abschnitt S eines Verkehrswegs oder einer Straße mit geänderter Verkehrsführung. Beispielsweise kann in Figur 2 rechts neben der Fahrspur eine Baustelle sein, die eine Änderung der Verkehrsführung bzw. der Spurführung erforderlich macht. Die Fahrbahn wird in dem in Figur 2 gezeigten Zustand verschwenkt und auf eine Spur der Gegenfahrbahn überführt, die eigentlich dem Gegenverkehr zugeordnet ist. An dem Abschnitt S sind zur Kenntlichmachung der geänderten Verkehrsführung für einen Verkehrsteilnehmer die schematisch dargestellten Verkehrsleiteinrichtungen 18 bis 34 angeordnet. Die Verkehrsleiteinrichtungen 18 bis 34 können Leitbaken oder Leitpfosten sein. Jede der Verkehrsleiteinrichtungen 18 bis 34 weist eine Sensoreinheit 10₁ bis 10₈ auf. Es sind weitere Sensoreinheiten 10₉ bis 10₁₆ dargestellt, wobei aus Gründen der Übersichtlichkeit auf die Darstellung der den Sensoreinheiten 10₉ bis 10₁₆ zugeordneten Verkehrsleiteinrichtungen verzichtet wurde. Die Sensoreinheiten 10₁ bis 10₁₆ können in die Verkehrsleiteinrichtungen 18 bis 34 integriert oder an den Verkehrsleiteinrichtungen 18 bis 34 befestigt sein.

Die Sensoreinheiten 10₁ bis 10₁₆ spannen zwischen sich ein Maschennetz zur Bestimmung der relativen Positionen der einzelnen Sensoreinheiten 10₁ bis 10₁₆ auf. Das von den Sensoreinheiten aufgespannte Maschennetz wird durch die zwischen den Sensoreinheiten 10₁ bis 10₁₆ verlaufenden Linien dargestellt. Jede Sensoreinheit 10₁ bis 10₁₆ erfasst die relativen Positionsinformationen einer oder mehrerer der übrigen Sensoreinheiten 10₁ bis 10₁₆ Die Sensoreinheit 10₁ erfasst beispielsweise die relativen Positionsinformationen der Sensoreinheiten 10₂, 10₃, 10₄, 10₆ und 10₈. In gleicher Weise kann die Sensoreinheit 10₂ die relativen Positionsinformationen der Sensoreinheiten 10₁, 10₃, 10₄, 10₅ und 10₇ erfassen. Gleiches gilt für die übrigen Sensoreinheiten 10₃ bis 10₁₆, die ebenfalls die relativen Positionsinformationen von benachbarten Sensoreinheiten 10₁ bis 10₁₆ erfassen.

Gemäß dem in Figur 2 gezeigten Ausführungsbeispiel umfasst das System 100 drei Schnittstelleneinheiten 12₁, 12₂ und 12₃. Die Schnittstelleneinheiten 12₁, 12₂ und 12₃ haben bekannte absolute Positionsinformationen. Die absoluten Positionsinformationen können von den Schnittstelleneinheiten 12₁, 12₂ und 12₃ ermittelt oder eingelesen werden. Die Schnittstelleneinheiten 12₁, 12₂ und 12₃ spannen basierend auf ihren bekannten absoluten Positionsinformationen ein lokales Koordinatensystem auf, in dem die relativen Positionsinformationen der Sensoreinheiten 10₁ bis 10₁₆ bestimmt werden können.

Die Sensoreinheiten 10₁ bis 10₁₆ senden die von ihnen erfassten relativen Positionsinformationen an die Schnittstelleneinheiten 12₁, 12₂ und 12₃. Es kann vorgesehen sein, dass eine Gruppe der Sensoreinheiten 10₁ bis 10₁₆ die von Ihnen erfassten Positionsinformationen an die Schnittstelleneinheit 12₁ sendet. Eine jeweils andere Gruppe der Sensoreinheiten 10₁ bis 10₁₆ kann die von Ihnen erfassten Positionsinformationen an die Schnittstelleneinheit 12₂ senden. Eine weitere Gruppe der Sensoreinheiten 10₁ bis 10₁₆ kann die von Ihnen erfassten Positionsinformationen an die Schnittstelleneinheit 12₃ senden. Die Sensoreinheiten 10₁ bis 10₁₆ können die von ihnen erfassten Positionsinformationen an mehrere der Schnittstelleinheiten 12₁, 12₂ und 12₃ senden. Beispielsweise können die Sensoreinheiten 10₁ bis 10₈ die von Ihnen erfassten Positionsinformationen an die Schnittstelleneinheit 12₁ senden, wohingegen die Sensoreinheiten 10₉ bis 10₁₆ die von Ihnen erfassten Positionsinformationen an die Schnittstelleneinheit 12₂ senden. Zusätzlich können die Sensoreinheiten 10₁ bis 10₁₆ die von ihnen erfassten Positionsinformationen an die Schnittstelleinheit 12₃ senden. Für die Bestimmung von 2-dimensionalen Positionsinformationen können drei Schnittstelleneinheiten 12₁, 12₂ und 12₃ vorgesehen werden. Für Bestimmung von 3-dimensionalen Positionsinformationen können vier Schnittstelleneinheiten 12₁, 12₂, 12₃ und 12ₓ (nicht gezeigt) vorgesehen werden.

Durch die bekannten absoluten Positionsinformationen der Schnittstelleneinheiten 12₁, 12₂ und 12₃ können die von den Sensoreinheiten 10₁ bis 10₁₆ erfassten relativen Positionsinformationen mit den absoluten Positionsinformationen bzw. mit der Geoposition der Schnittstelleneinheiten 12₁, 12₂ und 12₃ verknüpft werden. Die auf diese Weise erzeugten Positionsinformationen können von den Schnittstelleneinheiten 12₁, 12₂ und 12₃ einem externen Empfänger bereitgestellt werden. Die von den Sensoreinheiten 10₁ bis 10₁₆ erfassten relativen Positionsinformationen können auch ohne Verknüpfung mit absoluten Positionsinformationen an externe Empfänger ausgegeben werden.

Mit der beschriebenen Sensoranordnung können Änderungen der Positionsinformationen der an den Verkehrsleiteinrichtungen 18 bis 34 angebrachten Sensoreinheiten 10₁ bis 10₁₆ schnell und hochgenau erfasst werden, sodass die von dem System 100 bereitgestellten Positionsinformationen über die Schnittstelleneinheiten 12₁, 12₂ und 12₃echtzeitnah einem externen Empfänger zur Verfügung gestellt werden können.

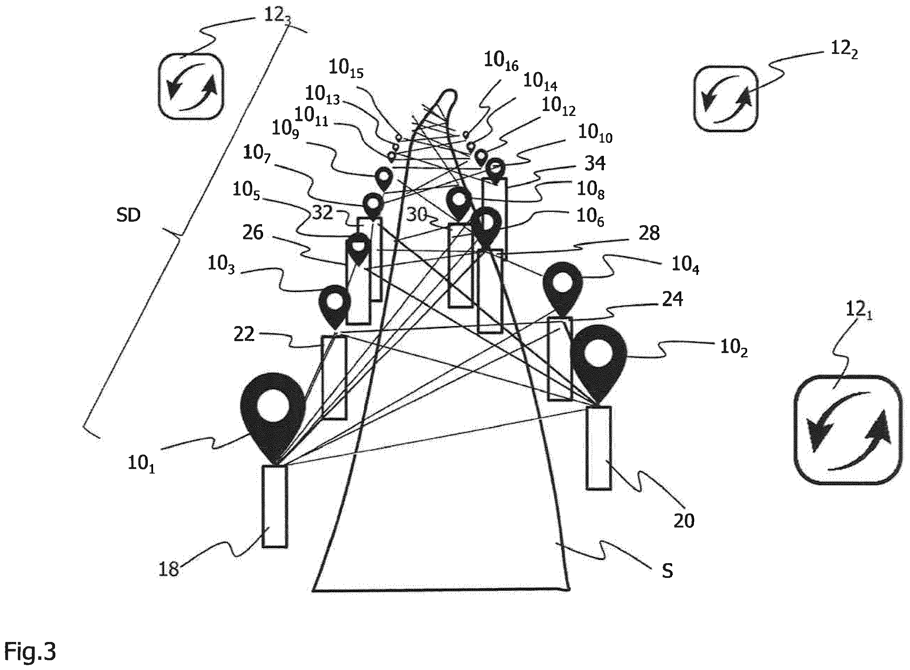

Figur 3 zeigt eine Situation in der die Verkehrsleiteinrichtungen 28 und 30, d. h. die Leitbaken 28 und 30 verschoben wurden. Die Leitbaken können beispielsweise durch Baustellenarbeiter oder ein Baustellenfahrzeug (nicht gezeigt) verschoben worden sein. Die Leitbaken 28 und 30 befinden sich mit denen an ihnen angeordneten Sensoreinheiten 10₆ und 10₈ in der Fahrspur des Abschnitts S. Durch die Sensoreinheiten 10₁ bis 10₁₆ und das von Ihnen aufgespannte, durch die Linien dargestellte Maschennetz kann die Veränderung der Position der Sensoreinheiten 10₆ und 10₈ bzw. die neue Position der Sensoreinheiten 10₆ und 10₈ mit den Verkehrsleiteinrichtungen 28 und 30 schnell und hochgenau erfasst werden. Mit dem System 100 können aufgrund der schnellen und genauen Erfassung der Veränderungen der Positionsinformationen der Verkehrsleiteinrichtungen 28 und 30 echtzeitnah aktualisierte Positionsinformationen an externe Empfänger ausgegeben werden.

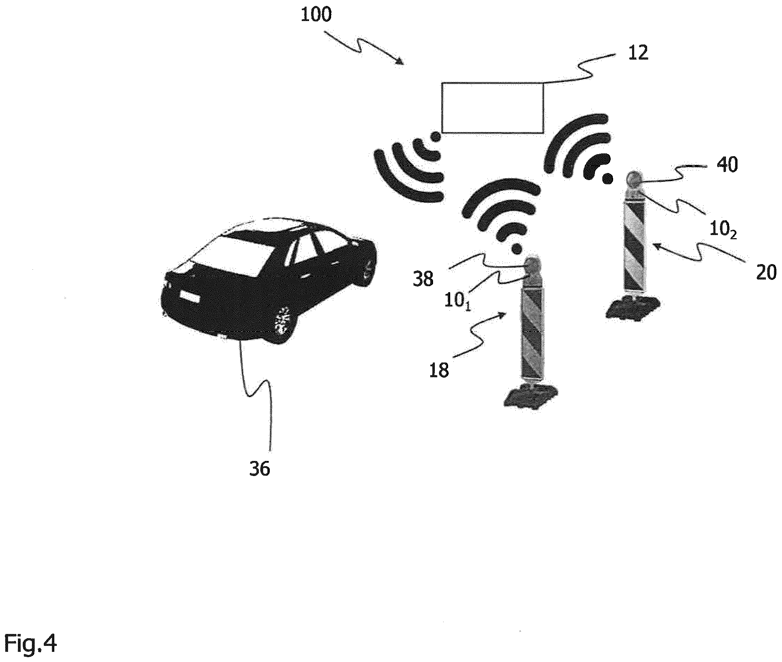

Figur 4 zeigt eine schematische Ansicht der Kommunikation des Systems 100 mit einem Fahrzeug 36 als externen Empfänger. In Figur 4 sind als Verkehrsleiteinrichtungen die Leitbaken 18 und 20 gezeigt. Die Leitbaken 18 und 20 weisen jeweils eine Warnleuchte 38 und 40 auf. Die Sensoreinheiten 10₁ und 10₂ können an den Warnleuchte 38 und 40 befestigt oder in die Warnleuchte 38 und 40 integriert sein. Die Sensoreinheiten 10₁ und 10₂ senden die von Ihnen erfassten relativen Positionsinformationen an die Schnittstelleneinheit 12 des Systems 100. Sie Schnittstelleneinheit 12 ist dazu ausgebildet, die von den Sensoreinheiten 10₁ und 10₂ erfassten relativen Positionsinformationen dem Fahrzeug 36 als externen Empfänger bereitzustellen. Dadurch könne dem Fahrzeug echtzeitnah die exakten Positionen der Verkehrsleiteinrichtungen 18 und 20 und der daran angeordneten Sensoreinheiten 10₁ und 10₂ bereitgestellt werden. Das Fahrzeug 36 kann den Abschnitt S (siehe Figur 2) sicher durchfahren oder anhalten, um nicht mit den Verkehrsleiteinrichtungen 28 und 30 zu kollidieren.

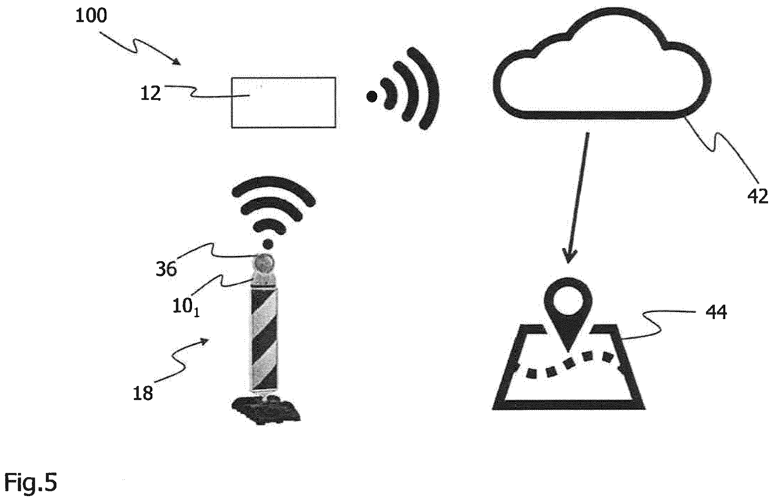

Figur 5 zeigt eine schematische Darstellung der Kommunikation des Systems 100 mit einem Kartendienst 42. Die Verkehrsleiteinrichtung 18 ist eine Leitbake mit einer daran angebrachten Warnleuchte 36. Die Sensoreinheit 10₁ kann in die Warnleuchte 36 integriert oder an der Warnleuchte 36 befestigt sein. Die Sensoreinheit 10₁ an der Leitbaken 18 sendet die von ihr erfassten Positionsinformationen an die Schnittstelleneinheit 12 des Systems 100. Die Schnittstelleneinheit 12 des Systems 100 kann die von der Sensoreinheit 10₁ erfassten relativen Positionsinformationen mit ihren absoluten Positionsinformationen verorten. Die Schnittstelleneinheit 12 kann die von dem System 100 erfassten Positionsinformationen dem Kartendienst 42 zur Verfügung stellen. Der Kartendienst 42 kann cloud-basiert sein. Die dem Kartendienst 42 zur Verfügung gestellten Positionsinformationen können in eine digitale Karte 44 integriert werden, sodass autonome Fahrzeuge oder Fahrassistenzsysteme eines Fahrzeugs, die mit ihren Navigationssystemen auf die digitale Karte 44 zugreifen, die aktuelle Position Leitbake 18 mit der Sensoreinheit 10₁ erfassen können.

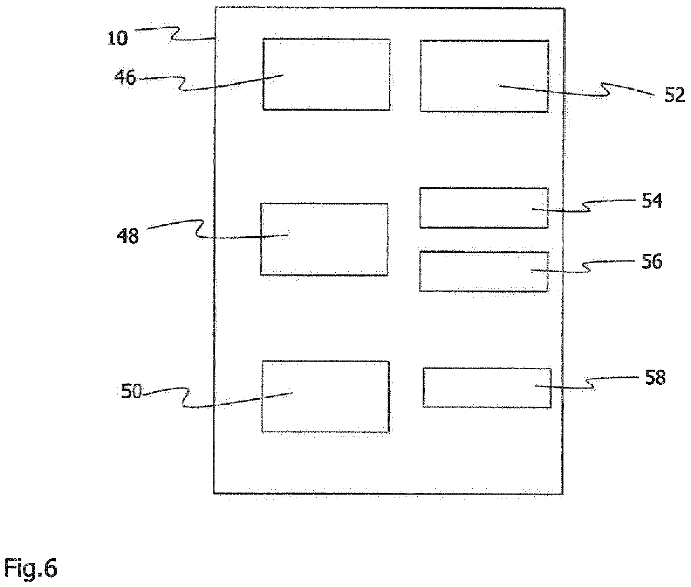

Figur 6 zeigt eine schematische Ansicht einer Sensoreinheit 10. Die Sensoreinheit 10 weist einen Sensor 46 zur Erfassung der Positionsinformationen, eine Sende-/Empfangseinheit 48 und eine Steuerung 50 auf, die den Sensor 46 und die Sende-/Empfangseinheit 48 steuern kann. Die Sensoreinheit 10 kann ferner eine Energiespeichereinheit 52 aufweisen. Anstelle der Energiespeichereinheit 52 kann eine Einheit zur Erzeugung von elektrischer Energie vorgesehen sein. Diese Einheit kann beispielsweise ein Solarpanel aufweisen, um die Sensoreinheit 10 mit elektrischer Energie zu versorgen. Eine Sensoreinheit 10 kann somit eine autarke und/oder eine in sich abgeschlossene Einheit sein. Ferner kann die Sensoreinheit 10 mit einer Energiespeichereinheit oder der Energieversorgung einer Verkehrsleiteinrichtung verbunden werden. In diesem Fall kann die Sensoreinheit ohne eigene Energieversorgung ausgebildet sein.

Darüber hinaus kann die Sensoreinheit 10 einen Beschleunigungssensor 54 und ein Gyroskop 56 aufweisen. Mit dem Beschleunigungssensor 54 und dem Gyroskop 56 können die mechanischen Belastungen der Sensoreinheit 10 aufgrund von Stößen, Schlägen oder Vibrationen erfasst werden. Neben dem Beschleunigungssensor 54 und dem Gyroskop 56 kann die Sensoreinheit 10 wenigstens einen weiteren Sensor 58 aufweisen. Dieser Sensor kann ein Temperatursensor, ein Feuchtigkeitssensor, ein Barometer oder ein Magnetometer sein. Es ist ebenfalls denkbar, dass die Sensoreinheit 10 mehrere der genannten Sensoren oder alle der genannten Sensoren umfasst. Die von den genannten Sensoren bzw. von den Sensoren 54, 56 und 58 erfassten Informationen können an die Schnittstelleinheit 12 gesendet werden (siehe Fig. 1). Dadurch kann der Zustand der Sensoreinheit 10 ermittelt und berücksichtigt werden. Ferner ist es denkbar, auf Basis der von den genannten Sensoren bzw. von den Sensoren 54, 56 und 58 erfassten Informationen die ermittelten relativen Positionsinformationen zu interpretieren bzw. die erfassten Informationen bei der Erfassung der relativen Positionsinformationen zu berücksichtigen.

Mit dem erfindungsgemäßen System 100 und den erfindungsgemäßen Sensoreinheiten 10 kann die Position wenigstens einer Verkehrsleiteinrichtung 18 bis 34 exakt und in Echtzeit oder zumindest echtzeitnah bestimmt werden. Die mit dem System bestimmten Positionsinformationen können zur Überprüfung der Positionierung der Verkehrsleiteinrichtungen bei geänderter Verkehrsführung (z.B. bei einer Baustelle), für autonome Fahrzeuge oder Fahrassistenzsysteme sowie für Kartendienste bereitgestellt werden. Dadurch kann die Verkehrsführung und auch die Position und Lage von Baustellen exakt und echtzeitnah bestimmt werden.

## Patentansprüche

1. System (100) zur Bestimmung der Position von Verkehrsleiteinrichtungen,
wobei das System (100) wenigstens eine Sensoranordnung (SD) und wenigstens eine Schnittstelleneinheit (12) aufweist,
wobei die Sensoranordnung (SD) an wenigstens einer Verkehrsleiteinrichtung (18 bis 34) anbringbar oder angebracht ist,
wobei die Sensoranordnung (SD) dazu ausgebildet ist, zumindest Positionsinformationen der Sensoranordnung (SD) zu bestimmen, die die Position der wenigstens einen Verkehrsleiteinrichtung (18 bis 34) angeben,
wobei die Sensoranordnung (SD) dazu ausgebildet ist, die bestimmten Positionsinformationen an die wenigstens eine Schnittstelleneinheit (12) zu senden,
wobei die wenigstens eine Schnittstelleneinheit (12) dazu ausgebildet ist, die von der Sensoranordnung (SD) gesendeten Positionsinformationen zu empfangen, und wobei die wenigstens eine Schnittstelleneinheit (12) ferner dazu ausgebildet ist, die Positionsinformationen wenigstens einem externen Empfänger (16) bereitzustellen.

2. System (100) nach Anspruch 1,
wobei die Sensoranordnung (SD) wenigstens eine Sensoreinheit (10) umfasst,
wobei die wenigstens eine Sensoreinheit (10) dazu ausgebildet ist, relative Positionsinformationen relativ zu zumindest einer weiteren Sensoreinheit (10) zu ermitteln.

3. System (100) nach Anspruch 2,
wobei die wenigstens eine Sensoreinheit (10) wenigstens einen Sensor (46) aufweist, der die relativen Positionsinformationen wenigstens einer weiteren Sensoreinheit (10) der Sensoranordnung (SD) erfasst.

4. System (100) nach einem der Ansprüche 1 bis 3,
wobei das System (100) dazu ausgebildet ist, die Position der wenigstens einen Schnittstelleneinheit (12) in absoluten Positionsinformationen zu ermitteln und/oder einzulesen.

5. System (100) nach Anspruch 4,
wobei das System (100) wenigstens eine Informationsverarbeitungseinheit (14) aufweist, die dazu ausgebildet ist, einen Bezug zwischen den von der wenigstens einen Sensoreinheit (10) bestimmten relativen Positionsinformationen und den absoluten Positionsinformationen der wenigstens einen Schnittstelleneinheit (12) herzustellen.

6. System (100) nach einem der Ansprüche 1 bis 5,
wobei die Schnittstelleneinheit (12) dazu ausgebildet ist, kabellos mit dem wenigstens einen externen Empfänger (16) zu kommunizieren.

7. System (100) nach einem der Ansprüche 2 bis 6,
wobei die wenigstens eine Sensoreinheit (10) wenigstens eine Sende-/Empfangseinheit (48) aufweist, die zumindest zur kabellosen Kommunikation mit der wenigstens einen Schnittstelleneinheit (12) ausgebildet ist, und/oder wobei die wenigstens eine Sensoreinheit (10) dazu ausgebildet ist, kabellos mit wenigstens einer weiteren Sensoreinheit (10) zu kommunizieren.

8. System (100) nach einem der Ansprüche 1 bis 7,
wobei die wenigstens eine Schnittstelleneinheit (12) dazu ausgebildet ist, mit einem Fahrzeug (36) als externen Empfänger zu kommunizieren.

9. System (100) nach einem der Ansprüche 3 bis 8,
wobei der Sensor (46) ein Time-of-Flight-Sensor zur Erfassung der Positionsinformationen ist.

10. System (100) nach einem der Ansprüche 1 bis 9,
wobei die wenigstens eine Schnittstelleneinheit (12) dazu ausgebildet ist, ein Koordinatensystem aufzuspannen, in dem die Positionsinformationen der Sensoranordnung (SD) bestimmt werden, und/oder
wobei das System (100) mehrere Schnittstelleneinheiten (12) aufweist, denen jeweils ein Teil der Sensoreinheiten (10) der Sensoranordnung zugeordnet ist.

11. Sensoreinheit (10) für ein System (100) zur Bestimmung der Position von Verkehrsleiteinrichtungen, mit:
wenigstens einem Sensor (46) zur Erfassung der Positionsinformationen,
wenigstens einer Sende-/Empfangseinheit (48), die zur kabellosen Kommunikation ausgebildet ist, und
wenigstens einer Steuerung (50), die zur Steuerung des wenigstens einen Sensors (46) und/oder der wenigstens einen Sende-/Empfangseinheit (48) ausgebildet ist.

12. Sensoreinheit (10) nach Anspruch 11,
wobei die Sensoreinheit (10) eine Energiespeichereinheit (52) oder eine Energieerzeugungseinheit aufweist, und/oder wobei die Sensoreinheit (10) mit der Energiespeichereinheit einer Verkehrsleiteinrichtung verbindbar oder verbunden ist, und/oder wobei die Sensoreinheit (10) mit einer Kapselung ausgebildet ist.

13. Sensoreinheit (10) nach Anspruch 11 oder 12,
wobei die Sensoreinheit (10) wenigstens einen der nachfolgend aufgeführten Sensoren umfasst: Gyroskop (56), Beschleunigungssensor (54), Magnetometer, Barometer, Feuchtigkeitssensor, Temperatursensor.

14. Sensoreinheit (10) nach einem der Ansprüche 11 bis 13,
wobei die Sensoreinheit (10) zur Befestigung an oder zur Integration in eine Verkehrsleiteinrichtung oder eine Warnleuchte für Verkehrssicherungsmaßnahmen ausgebildet ist.

15. Verkehrsleiteinrichtung oder Warnleuchte mit einer Sensoreinheit (10) nach einem der Ansprüche 11 bis 14.
